# EUROPEAN PATENT APPLICATION

(11) **EP 4 810 561 A1**
(43) Date of publication of application: **23.09.2026**
(21) Application number: 24891696.7
(22) Date of filing: 05.11.2024
(51) Int. Cl.: C08L 23/12, C08K 5/00, C08J 3/28

(54) **POLYPROPYLENE RESIN COMPOSITION HAVING EXCELLENT MELT STRENGTH AND PREPARATION METHOD THEREFOR**

(30) Priority: 16.11.2023 KR 20230159202
(71) Applicant: Lotte Chemical Corporation, Seoul 05551 (KR)
(72) Inventor: JUNG, Jae-hoon, Daejeon 34110 (KR); LIM, Jisu, Daejeon 34110 (KR); KIM, Changsub, Daejeon 34110 (KR); SON, Chang Kyu, Daejeon 34110 (KR)
(74) Representative: Germain Maureau
(86) International application number: PCT/KR2024/017228
(87) International publication number: WO 2025/105749

(57) **Abstract**

Disclosed are a polypropylene resin composition having high melt strength and exhibiting excellent processability and moldability, and a preparation method therefor. The present invention provides a polypropylene resin composition and a preparation method therefor, wherein the composition has a weight average molecular weight of 300,000 to 450,000 g/mol, a molecular weight distribution (MWD, Mw/Mn) of 5 to 8, and a high molecular weight content of 6 to 10 wt% with a molecular weight of 1,000,000 g/mol or more.

## Description

### TECHNICAL FIELD

The present invention relates to a polyethylene resin composition and a preparation method therefor, and more particularly, to a polyethylene resin composition exhibiting excellent melt strength and a preparation method therefor.

This application claims the benefit of Korean Patent Application No. 10-2023-0159202, filed on 11/16/2023, in the Korean Intellectual Property Office, the disclosure of which is incorporated herein in its entirety by reference.

### BACKGROUND ART

Polypropylene, due to its excellent mechanical properties, low specific gravity, and easy moldability, is widely used for general-purpose product applications, and recently, with improvements in mechanical properties, is used in various fields even for products requiring high performance.

However, a general type of polypropylene is a linear polymer and has a limitation of low melt strength. Due to such a limitation, polypropylene has been limited in its use as a material for sheet foaming, as well as for deep-draw vacuum pressure molded products or large blow products requiring high extensional viscosity.

While various methods for increasing the melt tension of typical polypropylene have been disclosed, most of the methods involve modifying linear polypropylene by introducing long-chain branching through reactive extrusion after the addition of peroxides, which may cause issues such as degradation of propylene due to the peroxides during the reactive extrusion process, residual peroxides, and yellowing.

Korean Patent Registration No. 0311290 discloses a method for preparing a propylene polymer material having high melt strength by irradiating polypropylene with electron beams, in which linear polypropylene is polymerized, irradiated with electron beams in an irradiation chamber under a nitrogen atmosphere, and then pelletized to prepare a non-linear propylene polymer. Evaluation on the foaming of the prepared polymer exhibits a satisfactory foaming ratio of up to 8 times, but there is an issue of using chlorofluorocarbon (CFC) gas, an ozone-depleting substance currently banned internationally, as a foaming agent in a high content of 8%.

Korean Patent Registration No. 1938511 discloses a method for preparing high melt strength polypropylene through reactive extrusion by adding organic peroxides to polypropylene, but this method also involves issues in that residual peroxides and yellowing may occur.

Korean Patent Registration No. 2129922 discloses a high-flow, partially crosslinked, impact-resistant polypropylene exhibiting improved fluidity and impact resistance by using a specific crosslinking agent, but this method also involves issues in that it is difficult to achieve the melt tension required for vacuum pressure molding or foam molding.

### DISCLOSURE OF THE INVENTION

### TECHNICAL PROBLEM

An aspect of the present invention provides a polypropylene resin composition having high melt strength and exhibiting excellent processability and moldability, and a preparation method therefor.

### TECHNICAL SOLUTION

According to an aspect of the present invention, there is provided a polypropylene resin composition having a weight average molecular weight of 300,000 to 450,000 g/mol, a molecular weight distribution (MWD, Mw/Mn) of 5 to 8, and a high molecular weight content of 6 to 10 wt% with a molecular weight of 1,000,000 g/mol or more.

According to an embodiment of the present invention, the polypropylene resin composition has a strain hardening coefficient of 12 or more, a melt strength of 35 cN or more, a shear viscosity (at 0.1 s⁻¹) of 40,000 Pa·s or more, a shear viscosity (at 1,000 s⁻¹) of 100 Pa·s or less, and a shear thinning index of 40 or more, as calculated according to methods below.

### [Method for calculating strain hardening coefficient]

Measurement using Equation 1 below:

$Strain Hardening Coefficient = ηe \left(3.5\right) / \left\{3\times η*\left(0.01\right)\right\}$

In Equation 1, ηe(3.5) is an extensional viscosity measured under conditions of a temperature of 180°C, a strain rate of 1.0 s⁻¹, and a time of 3.5 s using an extensional viscosity fixture (EVF) mode after fixing a specimen having a width of 20 mm, a length of 10 mm, and a thickness of 1 mm to a sample holder using an advanced rheometric expansion system (ARES), and η^{*}(0.01) is a complex viscosity measured under conditions of a temperature of 180°C and an angular frequency (ω) of 0.01 rad/s using a rotational rheometer;

### [Method for measuring melt strength]

A molten sample is extruded through a circular die having a diameter of 1 mm at a temperature of 200°C using a Rheotens apparatus (Rheotens 97, GÖTTFERT), and when a strand generated by extrusion is positioned 100 mm (spinline length) below a die exit and is wound by Rheotens wheels with a winding speed gradually increasing at an acceleration of 120 mm/s², a force (cN) applied to the wheels is recorded as a function of the winding speed (mm/s), and a peak prior to breakage of the strand or a force applied at the time of breakage is defined as the melt strength;

### [Method for measuring shear viscosity and method for calculating shear thinning index]

A sample extruded through a circular die having a diameter of 1 mm is measured using a capillary rheometer apparatus (RH7, NETZSCH) under conditions of a temperature of 190°C and a shear rate of 0.1 s⁻¹ to 1,000 s⁻¹, and the shear thinning index is calculated using Equation 2 below:

$Shear Thinning Index = \left|\frac{Δ Shear Viscosity \left(@ 0.1 {s}^{- 1}∼1,000 {s}^{- 1}\right)}{Δ Shear Rate \left(@ 0.1 {s}^{- 1}∼1,000 {s}^{- 1}\right)}\right|$

According to another embodiment of the present invention, the polypropylene resin composition is for a sheet for vacuum pressure molding, for blow, or for foam.

According to another aspect of the present invention, there is provided a method for preparing the polypropylene resin composition described above by irradiating a resin composition, in which 0.01 to 2 parts by weight of a crosslinking agent is added to 100 parts by weight of polypropylene, with an electron beam.

According to an embodiment of the present invention, the crosslinking agent is at least one selected from the group consisting of triallyl isocyanurate, triallyl cyanurate, trimethylolpropane trimethacrylate, trimethylolpropane triacrylate, triallyl trimesate, triallyl phosphate, pentaerythritol triacrylate, and divinylbenzene.

According to another embodiment of the present invention, an irradiation dose of the electron beam is 5 to 20 kGy.

### ADVANTAGEOUS EFFECTS

The present invention may provide a polypropylene resin composition exhibiting high melt strength and thus having excellent processability and product moldability, and a method for preparing the same, by presenting a polypropylene resin composition prepared by irradiating a resin composition, in which a crosslinking agent is added to polypropylene, with an electron beam, and thus having a weight average molecular weight of 300,000 to 450,000 g/mol, a molecular weight distribution (MWD, Mw/Mn) of 5 to 8, and a high molecular weight content of 6 to 10 wt% with a molecular weight of 1,000,000 g/mol or more.

The polypropylene resin composition according to the present invention may be used for various applications such as extrusion, sheet, and injection molding, and may be more suitably used for a sheet for vacuum pressure molding, for blow, or for foam, which requires high melt strength characteristics.

### MODE FOR CARRYING OUT THE INVENTION

Hereinafter, preferred embodiments of the present invention will be described in detail. In describing the present invention, detailed descriptions of related known art will be omitted when it is determined that the detailed descriptions may obscure the gist of the present invention. Throughout the description, when an element "includes" a component, it may indicate that the element does not exclude another component unless explicitly described to the contrary, but may further include another component.

The present invention discloses a polypropylene resin composition having a weight average molecular weight of 300,000 to 450,000 g/mol, a molecular weight distribution (MWD, Mw/Mn) of 5 to 8, and a high molecular weight content of 6 to 10 wt% with a molecular weight of 1,000,000 g/mol or more. The polypropylene resin composition according to the present invention may be prepared by irradiating a resin composition, in which 0.01 to 2 parts by weight of a crosslinking agent is added to 100 parts by weight of polypropylene, with an electron beam.

In the present invention, the polypropylene is not particularly limited as long as the polypropylene is a resin for improving melt strength through electron beam irradiation, but a propylene homopolymer, a propylene random copolymer, or an impact polypropylene (a block copolymer of a propylene homopolymer and an ethylene-propylene copolymer) may be used. In this case, a comonomer used for preparing the propylene copolymer is preferably ethylene or α-olefin having 4 to 10 carbon atoms, and the content of the comonomer may be 30 wt% or less, preferably 1 to 10 wt%. The polypropylene may be used as one prepared by a commonly known process, and a method for preparing the polypropylene is not particularly limited in the present invention.

In the present invention, the polypropylene to which a crosslinking agent is added, followed by irradiation with an electron beam may have a weight average molecular weight of 300,000 to 450,000 g/mol and a molecular weight distribution (MWD, Mw/Mn) of 5 to 8, and preferably may have a weight average molecular weight of 340,000 to 420,000 g/mol and a molecular weight distribution (MWD, Mw/Mn) of 5.5 to 7.5. When the weight average molecular weight is less than 300,000 g/mol, a relatively low molecular weight results in, for example, an insufficient foaming ratio when the polypropylene is applied for foaming, or high flowability that makes molding difficult upon sheet molding, and when the weight average molecular weight exceeds 450,000 g/mol, flowability is reduced, which adversely affects molding. In addition, when the molecular weight distribution is less than 5, increasing the number of branches to a certain level or more is not achievable, and there is a process limit in setting the molecular weight distribution to exceed 8.

In the present invention, two types of polypropylenes with adjusted molecular weight properties may be mixed and used, or a single polypropylene having a specific molecular weight range may be used to achieve a polypropylene having the weight average molecular weight and the molecular weight distribution within the above ranges.

Specifically, when two types of polypropylenes with adjusted molecular weight properties are used in combination, 60 to 90 wt% of a high molecular weight polypropylene having a weight average molecular weight of 500,000 to 700,000 g/mol may be mixed with 10 to 40 wt% of a low molecular weight polypropylene having a weight average molecular weight of 50,000 to 200,000 g/mol, and preferably, 70 to 80 wt% of a high molecular weight polypropylene having a weight average molecular weight of 550,000 to 650,000 g/mol may be mixed with 20 to 30 wt% of a low molecular weight polypropylene having a weight average molecular weight of 80,000 to 150,000 g/mol.

In addition, when a single polypropylene is used, a polypropylene having a weight average molecular weight of 450,000 to 650,000 g/mol may be used, and preferably, a polypropylene having a weight average molecular weight of 500,000 to 600,000 g/mol may be used.

In the present invention, a triolefin-based crosslinking agent or divinylbenzene may be used as the crosslinking agent, and as the triolefin-based crosslinking agent, triallyl isocyanurate, triallyl cyanurate, trimethylolpropane trimethacrylate, trimethylolpropane triacrylate, triallyl trimesate, triallyl phosphate, pentaerythritol triacrylate, or the like may be used. In this case, it is desirable to select triallyl isocyanurate (TAIC) in consideration of maximizing the crosslinking effect through the introduction of long-chain branching during electron beam irradiation and achieving maximized extensional viscosity and melt strength by adjusting the content of the crosslinking agent and the electron beam absorption dose.

In the present invention, the crosslinking agent is mixed in an amount of 0.01 to 2 parts by weight with respect to 100 parts by weight of the polypropylene, and preferably may be mixed in an amount of 0.1 to 1.5 parts by weight, and more preferably in an amount of 0.5 to 1.2 parts by weight. When the content of the crosslinking agent is less than 0.01 parts by weight, it is difficult to expect a satisfactory crosslinking effect, and when the content exceeds 2 parts by weight, the crosslinking effect of polypropylene increases, allowing the introduction of a large amount of long-chain branching, but an excessive crosslinking effect may, for example, hinder cell growth during foaming, thereby reducing foaming performance, and may significantly increase gel formation.

In the present invention, the mixing of the polypropylene and the crosslinking agent may be performed according to a typical method known in the art. For example, the components may be fed into a mixer in required amounts, mixed, and then melt-extruded to be prepared into a pellet form using an extruder under conditions of an extrusion temperature of 180 to 240°C and a screw rotation speed of 95 to 100 rpm.

In the present invention, electron beam irradiation is performed on the mixture of polypropylene and a crosslinking agent to generate free radicals in the polypropylene and to introduce chains broken by the radicals as branches, thereby improving melt strength through the occurrence of interchain entanglement.

In the present invention, electron beam irradiation may be performed using, for example, an electron beam accelerator with an irradiation dose of 10 MeV. In the present invention, chain entanglement sufficient for the desired improvement in melt strength is achievable even with low-dose electron beam irradiation having an absorption dose of 5 to 20 kGy, and preferably 5 to 15 kGy. When the irradiation dose is less than 5 kGy, a small number of radicals are generated, making it difficult to impart high melt strength, and when the irradiation dose exceeds 20 kGy, a degree of degradation of molecular chains increases, which may reduce the melt strength.

The polypropylene resin composition according to the present invention may further include one or more types of typical additives known in the art as other additives, such as an antioxidant, a neutralizing agent, and a heat stabilizer. In this case, the content of each of the additives may be used in a range of 0.01 to 1 part by weight with respect to 100 parts by weight of the polypropylene resin composition for foaming of the present invention, but the content is not particularly limited thereto.

The antioxidant serves to prevent the breakage of resin molecules, caused by heat, oxygen, or the like during the manufacture of products using the polypropylene resin composition, the neutralizing agent serves to neutralize acid (specifically, hydrogen chloride) that may be generated by catalyst residues (metal components) used in polymerization, and the heat stabilizer serves to prevent a reduction in molecular weight during the use of polypropylene molded articles in a high-temperature environment.

A phosphorus-based antioxidant or a phenol-based antioxidant may be used as the antioxidant, and an example of the phosphorus-based antioxidant may include tris(2,3-di-t-butylphenyl)phosphite and an example of the phenol-based antioxidant may include tetrakis[ethylene-3-(3,5-di-t-butyl-4-hydroxyphenyl)propionate]methane.

In addition, calcium stearate or the like may be used as the neutralizing agent, and distearyl thiodipropionate or the like may be used as the heat stabilizer.

Molded bodies may be manufactured using the polypropylene resin composition according to the present invention through various molding methods, and the shape, size, or the like of the molded bodies may be appropriately determined. Examples of a method for preparing the molded body may include an injection molding method, a press molding method, a vacuum molding method, a foam molding method, an extrusion molding method, and the like, which are commonly used industrially, and depending on the purpose, a molding method for bonding the polypropylene resin composition of the present invention to a polypropylene-based resin of the same type as or a different type from the polypropylene resin composition, or to another resin, or a coextrusion molding method may also be included. However, the polypropylene resin composition according to the present invention may exhibit excellent extensional viscosity and may be more suitably used for deep-draw vacuum pressure molding or foaming sheet molding. Examples of a product manufactured through the deep-draw vacuum pressure molding may include a cup-shaped container, and examples of a product manufactured through the foam molding may include a lunch box container, a cup noodle container, a meat processing tray, and the like.

The polypropylene resin composition according to the present invention exhibits melt strength properties suitable for vacuum pressure molding sheets, blowing, or foaming sheet molding. That is, the present invention confirms that by mixing a crosslinking agent with polypropylene and melt-extruding the mixture, and then preparing a polypropylene resin composition through electron beam irradiation, crosslinking effects by the introduction of long-chain branching are maximized during electron beam irradiation while melt strength is improved by adjusting the crosslinking agent content and the electron beam absorption dose, and furthermore, excellent product moldability as well as processability is achieved when the polypropylene resin composition has a strain hardening coefficient and a shear thinning index within specific ranges. This is because, taking foam molding as an example, the polypropylene resin composition has a high shear thinning effect, which results in high flowability due to low viscosity in a high shear rate region inside an extruder, thereby facilitating processability within the extruder, and which also results in the prevention of the bursting of foaming cells (inhibiting the formation of open cells) due to high viscosity in a low shear rate region after extrusion through a die, thereby improving the quality and productivity of foam processing.

Specifically, the polypropylene resin composition according to the present invention may have a strain hardening coefficient of 12 or more, preferably 12 to 60, and more preferably 20 to 50; a melt strength of 35 cN or more, preferably 30 to 60 cN, and more preferably 40 to 60 cN; a shear viscosity (at 0.1 s⁻¹) of 40,000 Pa·s or more, preferably 40,000 to 100,000 Pa·s, and more preferably 45,000 to 100,000 Pa·s; a shear viscosity (at 1,000 s⁻¹) of 100 Pa·s or less, preferably 10 to 100 Pa·s, and more preferably 10 to 90 Pa·s; and a shear thinning index of 40 or more, preferably 40 to 100, and more preferably 45 to 100, as calculated according to following methods.

### [Method for calculating strain hardening coefficient]

The strain hardening coefficient was measured using Equation 1 below:

$Strain Hardening Coefficient = ηe \left(3.5\right) / \left\{3\times η*\left(0.01\right)\right\}$

In Equation 1, ηe(3.5) is an extensional viscosity measured under conditions of a temperature of 180°C, a strain rate of 1.0 s⁻¹, and a time of 3.5 s using an extensional viscosity fixture (EVF) mode after fixing a specimen having a width of 20 mm, a length of 10 mm, and a thickness of 1 mm to a sample holder using an advanced rheometric expansion system (ARES), and η^{*}(0.01) is a complex viscosity measured under conditions of a temperature of 180°C and an angular frequency (ω) of 0.01 rad/s using a rotational rheometer;

### [Method for measuring melt strength]

A molten sample is extruded through a circular die having a diameter of 1 mm at a temperature of 200°C using a Rheotens apparatus (Rheotens 97, GÖTTFERT), and when a strand generated by extrusion is positioned 100 mm (spinline length) below a die exit and is wound by Rheotens wheels with a winding speed gradually increasing at an acceleration of 120 mm/s², a force (cN) applied to the wheels is recorded as a function of the winding speed (mm/s), and a peak prior to breakage of the strand or a force applied at the time of breakage is defined as the melt strength;

### [Method for measuring shear viscosity and method for calculating shear thinning index]

A sample extruded through a circular die having a diameter of 1 mm is measured using a capillary rheometer apparatus (RH7, NETZSCH) under conditions of a temperature of 190°C and a shear rate of 0.1 s⁻¹ to 1,000 s⁻¹, and the shear thinning index is calculated using Equation 2 below:
$Shear Thinning Index = \left|\frac{Δ Shear Viscosity \left(@ 0.1 {s}^{- 1}∼1,000 {s}^{- 1}\right)}{Δ Shear Rate \left(@ 0.1 {s}^{- 1}∼1,000 {s}^{- 1}\right)}\right|$

Hereinafter, specific examples according to the present disclosure will be described.

### Examples and Comparative Examples

Raw materials having compositions shown in Table 1 were mixed in a Henschel mixer for 1 minute and then extruded through a single-screw extruder at 180 to 240°C to prepare a pellet-type polypropylene resin composition, and then a polypropylene composition was prepared by maintaining an electron beam irradiation dose described in Table 1. Irradiation with the electron beam was performed under conditions of a beam energy of 10 MeV, a line speed of 0.5 to 3 m/min, and an irradiation distance of 4 to 5 m.

**[Table 1]**

| Item | Unit | Example 1 | Example 2 | Example 3 | Example 4 | Example 5 | Compara tive Example 1 | Compara tive Example 2 | Compara tive Example 3 | Compara tive Example 4 | Compara tive Example 5 | Compara tive Example 6 | Compara tive Example 7 | Example 6 |
|---|---|---|---|---|---|---|---|---|---|---|---|---|---|---|
| A1 | Parts by weight | 100 | 100 | 100 | - | - | - | - | - | - | - | - | - | - |
| A2 | Parts by weight | - | - | - | 75 | 75 | 75 | 75 | 100 | 100 | 100 | 100 | 75 | 75 |
| A3 | Parts by weight | - | - | - | 25 | 25 | 25 | 25 | - | - | - | - | 25 | 25 |
| B | Parts by weight | 1 | 1 | 1 | 1 | 1 | 1 | 1 | 1 | 1 | 1 | 1 | 1 | 1 |
| C | kGy | 5 | 10 | 15 | 10 | 15 | 3 | 3 | 3 | 5 | 10 | 15 | 10 | 15 |
| D1 | Parts by weight | 0.05 | 0.05 | 0.05 | 0.05 | 0.05 | 0.05 | 0.05 | 0.05 | 0.05 | 0.05 | 0.05 | 0.05 | 0.05 |
| D2 | Parts by weight | 0.1 | 0.1 | 0.1 | 0.1 | 0.1 | 0.1 | 0.1 | 0.1 | 0.1 | 0.1 | 0.1 | 0.1 | 0.1 |
| D3 | Parts by weight | 0.05 | 0.05 | 0.05 | 0.05 | 0.05 | 0.05 | 0.05 | 0.05 | 0.05 | 0.05 | 0.05 | 0.05 | 0.05 |
| * Note | | | | | | | | | | | | | | |
| A1: Polypropylene homopolymer (weight average molecular weight 540,000 g/mol) | | | | | | | | | | | | | | |
| A2: Polypropylene homopolymer (weight average molecular weight 600,000 g/mol) | | | | | | | | | | | | | | |
| A3: Polypropylene homopolymer (weight average molecular weight 110,000 g/mol) | | | | | | | | | | | | | | |
| B: Crosslinking agent (triallyl isocyanurate (TAIC)) | | | | | | | | | | | | | | |
| C: Electron beam irradiation dose | | | | | | | | | | | | | | |
| D1: Phenol-based antioxidant ((tetrakis[ethylene-3-(3,5-di-t-butyl-4-hydroxyphenyl)propionate]methane, Songnox 1010, Songwon Industrial) | | | | | | | | | | | | | | |
| D2: Phosphorus-based antioxidant (tris(2,3-di-t-butylphenyl)phosphite, Songnox 1680, Songwon Industrial) | | | | | | | | | | | | | | |
| D3: Neutralizing agent (calcium stearate, SAK-CS-POD, Sun Ace) | | | | | | | | | | | | | | |

### Test Example

Molecular weight properties, strain hardening coefficient, melt strength, shear viscosity, and a shear thinning index were measured or calculated for the polypropylene pellets prepared according to Examples and Comparative Examples above through following methods, and the results are shown in Table 2 below. In addition, foam moldability was evaluated for a molded article manufactured through following methods, and the results are shown in Table 2 below.

### [Measurement method]

### (1) Molecular weight properties

Weight average molecular weight (Mw) and molecular weight distribution (MWD, Mw/Mn) were measured using gel permeation chromatography (GPC, Agilent). Polystyrene was used as a standard material in the presence of a chloroform solvent.

### (2) Strain hardening coefficient

Strain hardening refers to a non-linear phenomenon exhibiting a rapid increase in viscosity accompanied by an increase in an amount of deformation in the measurement of extensional viscosity, and strain hardening coefficient was calculated using Equation 1 below to quantify and compare the strain hardening.$Strain Hardening Coefficient = ηe \left(3.5\right) / \left\{3\times η*\left(0.01\right)\right\}$

In Equation 1, ηe(3.5) is an extensional viscosity measured under conditions of a temperature of 180°C, a strain rate of 1.0 s⁻¹, and a time of 3.5 s using an extensional viscosity fixture (EVF) mode after fixing a specimen having a width of 20 mm, a length of 10 mm, and a thickness of 1 mm to a sample holder using an advanced rheometric expansion system (ARES), and η^{*}(0.01) is a complex viscosity measured under conditions of a temperature of 180°C and an angular frequency (ω) of 0.01 rad/s using a rotational rheometer.

### (3) Melt strength

A molten sample was extruded through a circular die having a diameter of 1 mm at a temperature of 200°C using a Rheotens apparatus (Rheotens 97, GÖTTFERT), and when a strand generated by extrusion was positioned 100 mm (spinline length) below a die exit and was wound by Rheotens wheels with a winding speed gradually increasing at an acceleration of 120 mm/s², a force (cN) applied to the wheels was recorded as a function of the winding speed (mm/s), and a peak prior to breakage of the strand or a force applied at the time of breakage was defined as the melt strength.

### (4) Shear viscosity and Shear thinning index

A sample extruded through a circular die having a diameter of 1 mm was measured using a capillary rheometer apparatus (RH7, NETZSCH) under conditions of a temperature of 190°C and a shear rate of 0.1 s⁻¹ to 1,000 s⁻¹, and the shear thinning index was calculated using Equation 2 below. That is, shear thinning index is an absolute value for a slope of a shear viscosity value at a shear rate of 0.1 s⁻¹ to 1,000 s⁻¹ measured through a capillary rheometer, and a higher value represents a higher shear thinning effect.$Shear Thinning Index = \left|\frac{Δ Shear Viscosity \left(@ 0.1 {s}^{- 1}∼1,000 {s}^{- 1}\right)}{Δ Shear Rate \left(@ 0.1 {s}^{- 1}∼1,000 {s}^{- 1}\right)}\right|$

### (5) Foam moldability

In preparing a polypropylene foam by adding and dry blending 0.3 parts by weight of talc as a nucleating agent with respect to 100 parts by weight of the prepared pellets, introducing carbon dioxide as a foaming agent, and performing foaming under conditions of a foaming temperature of 160 to 200°C, a screw rotation speed of 150 rpm, and a gear pump rotation speed of 20 rpm, a case in which a foam body was stably molded at a forming ratio of 5 times or more was evaluated as "Excellent", a case in which foaming of 5 times or more was achievable but foam body molding was unstable depending on molding conditions was evaluated as "Fair", and a case in which molding of 5 times or more was not achievable was evaluated as "Poor".

**[Table 2]**

| Item | Unit | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 | Comparative Example 7 | Example 6 |
|---|---|---|---|---|---|---|---|---|---|---|---|---|---|---|
| Weight average molecular weight | g/mol | 415,000 | 347,000 | 395,000 | 360,000 | 362,000 | 464,328 | 499,857 | 479,541 | 531, 815 | 576, 899 | 506,628 | 490,245 | 372, 946 |
| Molecular weight distribution | - | 5.7 | 6.5 | 7.0 | 7.2 | 5.5 | 6.9 | 5.9 | 4.1 | 4.3 | 5. 4 | 5.3 | 6.2 | 7.3 |
| Content with molecular weight of 1,000,000 or more | wt% | 9.6 | 6.8 | 9.0 | 7.6 | 7.1 | 11.5 | 12.4 | 11.4 | 12.8 | 13.8 | 11.3 | 11.4 | 8.3 |
| Strain hardening coefficient | - | 24.0 | 43.2 | 27.2 | 14.6 | 22.5 | 1.3 | 2.4 | 1.1 | 10.6 | 7.3 | 7.6 | 14.9 | 24.1 |
| Melt strength | cN | 46 | 45 | 44 | 39 | 36 | 10 | 14 | 13 | 18 | 27 | 19 | 38 | 37 |
| Shear viscosity (@0.1 s⁻¹) | Pa · s | 48,765 | 86,106 | 49,230 | 49,236 | 63, 794 | 73,594 | 55,279 | 85,791 | 78,942 | 63,522 | 52,141 | 34,544 | 35,176 |
| Shear viscosity (@1,000 s⁻¹) | Pa · s | 90 | 60 | 68 | 82 | 82 | 72 | 78 | 103 | 104 | 99 | 95 | 99 | 93 |
| Shear thinning index | - | 49 | 86 | 49 | 49 | 64 | 74 | 55 | 86 | 79 | 63 | 52 | 34 | 35 |
| Foam moldability | - | Good | Good | Good | Good | Good | Poor | Poor | Poor | Poor | Poor | Poor | Poor | Fair |

Referring to Table 2, it is confirmed that when a resin composition in which a crosslinking agent is added to polypropylene is irradiated with an electron beam according to the present invention to achieve a certain level of weight average molecular weight, molecular weight distribution, and high molecular weight content (Examples 1 to 5), radicals are generated and branches are formed simultaneously due to the crosslinking agent despite low-dose electron beam irradiation, resulting in excellent branching characteristics, excellent melt strength, and consequently excellent moldability during foam molding. However, it is found that even when a certain level of weight average molecular weight, molecular weight distribution, and high molecular weight content are achieved (Example 6), foam moldability is slightly degraded when shear thinning characteristics fail to reach a certain level, and therefore, it is desirable to satisfy required shear thinning characteristics along with molecular weight properties and melt strength of a final resin composition.

Regarding this, it is found that when a polypropylene resin composition deviates from a certain range of molecular weight due to differences in the degree of electron beam irradiation and has an excessive high molecular weight content (Comparative Examples 1 to 7), or a polypropylene resin composition deviates from a certain range of molecular weight distribution (Comparative Examples 3 and 4), required shear thinning characteristics may be satisfied, but strain hardening coefficient or melt strength is reduced, and thus moldability during foam molding is degraded.

The preferred embodiments of the present invention have been described. The description of the present invention has been presented for purposes of illustration, and it will be understood by those skilled in the art that other specific modifications may be easily made without changing the technical idea or essential features thereof.

Therefore, the scope of the present invention is represented by the following claims rather than the above detailed description, and all changes and changed forms derived from the meaning, scope, and equivalent concepts of the claims should be construed as being included in the scope of the present invention.

## Claims

1. A polypropylene resin composition having a weight average molecular weight of 300,000 to 450,000 g/mol, a molecular weight distribution (MWD, Mw/Mn) of 5 to 8, and a high molecular weight content of 6 to 10 wt% with a molecular weight of 1,000,000 g/mol or more.

2. The polypropylene resin composition of claim 1, wherein the polypropylene resin composition has a strain hardening coefficient of 12 or more, a melt strength of 35 cN or more, a shear viscosity (at 0.1 s⁻¹) of 40,000 Pa·s or more, a shear viscosity (at 1,000 s⁻¹) of 100 Pa·s or less, and a shear thinning index of 40 or more, as calculated according to methods below:
[method for calculating strain hardening coefficient]
measurement using Equation 1 below: $Strain Hardening Coefficient = ηe \left(3.5\right) / \left\{3\times η*\left(0.01\right)\right\}$
wherein in Equation 1, ηe(3.5) is an extensional viscosity measured under conditions of a temperature of 180°C, a strain rate of 1.0 s⁻¹, and a time of 3.5 s using an extensional viscosity fixture (EVF) mode after fixing a specimen having a width of 20 mm, a length of 10 mm, and a thickness of 1 mm to a sample holder using an advanced rheometric expansion system (ARES), and η^{*}(0.01) is a complex viscosity measured under conditions of a temperature of 180°C and an angular frequency (ω) of 0.01 rad/s using a rotational rheometer;
[method for measuring melt strength]
a molten sample is extruded through a circular die having a diameter of 1 mm at a temperature of 200°C using a Rheotens apparatus (Rheotens 97, GÖTTFERT), and when a strand generated by extrusion is positioned 100 mm (spinline length) below a die exit and is wound by Rheotens wheels with a winding speed gradually increasing at an acceleration of 120 mm/s², a force (cN) applied to the wheels is recorded as a function of the winding speed (mm/s), and a peak prior to breakage of the strand or a force applied at the time of breakage is defined as the melt strength;
[method for measuring shear viscosity and method for calculating shear thinning index]
a sample extruded through a circular die having a diameter of 1 mm is measured using a capillary rheometer apparatus (RH7, NETZSCH) under conditions of a temperature of 190°C and a shear rate of 0.1 s⁻¹ to 1,000 s⁻¹, and the shear thinning index is calculated using Equation 2 below: $Shear Thinning Index = \left|\frac{Δ Shear Viscosity \left(@ 0.1 {s}^{- 1}∼1,000 {s}^{- 1}\right)}{Δ Shear Rate \left(@ 0.1 {s}^{- 1}∼1,000 {s}^{- 1}\right)}\right| .$

3. The polypropylene resin composition of claim 1, wherein the polypropylene resin composition is for a sheet for vacuum pressure molding, for blow, or for foam.

4. A method for preparing the polypropylene resin composition according to claim 1 by irradiating a resin composition, in which 0.01 to 2 parts by weight of a crosslinking agent is added to 100 parts by weight of polypropylene, with an electron beam.

5. The method of claim 4, wherein the crosslinking agent is at least one selected from the group consisting of triallyl isocyanurate, triallyl cyanurate, trimethylolpropane trimethacrylate, trimethylolpropane triacrylate, triallyl trimesate, triallyl phosphate, pentaerythritol triacrylate, and divinylbenzene.

6. The method of claim 1, wherein an irradiation dose of the electron beam is 5 to 20 kGy.
